# FASCICULE DE BREVET EUROPEEN

(11) **EP 1 934 072 B1**
(45) Date de publication et mention de la délivrance du brevet: **29.12.2010**
(21) Numéro de dépôt: 06776428.2
(22) Date de dépôt: 26.07.2006
(51) Int. Cl.: B60R 16/04

(54) **Dispositif de fixation d'une batterie**
Batteriebefestigungsvorrichtung
Battery fixing device

(30) Priorité: 05.10.2005 FR 0510184
(43) Date de publication de la demande: 25.06.2008
(73) Titulaire: A. RAYMOND ET CIE, 38000 Grenoble (FR)
(72) Inventeur: PICAVET, Christophe, F-38130 Echirolles (FR)
(74) Mandataire: Rüttgers, Joachim
(86) Numéro de dépôt international: PCT/EP2006/007383
(87) Numéro de publication internationale: WO 2007/039003

(56) Documents cités:
- EP-A- 0 429 746
- EP-A- 1 378 389
- DE-A1- 10 230 492
- FR-A- 2 779 010
- FR-A- 2 796 494

## Description

### Domaine technique de l'invention

L'invention concerne un dispositif de fixation d'une batterie, notamment pour véhicule automobile, comprenant :
- un bac de support présentant une face d'appui sensiblement plane et deux rebords longitudinaux coopérant avec des premier et second talons de la batterie, un premier rebord longitudinal comprenant au moins un talon fixe, servant de butée de positionnement au premier talon de la batterie, lors du montage de la batterie dans le bac de support,
- des moyens de verrouillage, associés au second rebord longitudinal et comprenant au moins un levier d'actionnement, élastiquement déformable entre une première position de blocage de la batterie dans le bac de support et une seconde position de déblocage de la batterie.

### État de la technique

Dans tous les types de véhicules automobiles, la batterie est un élément standard, dont les dimensions font référence à des normes précises. Il existe différents types de dispositifs de fixation connus, pour placer et immobiliser la batterie sur le châssis du véhicule. Un premier type de dispositif de fixation connu utilise la face supérieure de la batterie et un deuxième type de dispositif de fixation connu utilise les talons de la batterie.

Un premier exemple de dispositif de fixation utilisant la face supérieure de la batterie consiste à mettre en appui la batterie sur un bac de support, à placer deux tiges verticales de part et d'autre de la batterie et à positionner un élément de bridage reliant les deux tiges verticales par-dessus la batterie. Le dispositif de fixation exerce alors un serrage vertical de la batterie, en s'appuyant sur sa face supérieure. Les tiges comportent généralement des extrémités filetées, traversant l'élément de bridage et coopérant avec des écrous pour effectuer le serrage. Cependant, ce type de dispositif nécessite l'utilisation d'outils, notamment pour le serrage des écrous, et la manipulation des différentes pièces est délicate.

D'autres exemples de dispositifs de fixation, utilisant la face supérieure de la batterie, consistent à utiliser un bac de support avec des parois latérales relevées, remplaçant les tiges verticales, et coopérant avec un élément de bridage reliant les deux parois du bac et fixé par un ou deux points d'ancrage. Un autre exemple de dispositif de fixation utilise une simple sangle en tissus entourant la batterie, fixée à ses extrémités de part et d'autre de la batterie.

Cependant, tous ces exemples de dispositifs de fixation utilisant la face supérieure de la batterie s'avèrent trop complexes, car ils se composent de plusieurs pièces facilement perdables et nécessitent l'utilisation d'outils pour le montage et le démontage de la batterie. Par ailleurs, le maintien de la batterie dans son bac de support n'est pas sécurisé.

Un premier exemple de dispositif de fixation utilisant les talons de la batterie est une bride métallique, solidaire du bac de support et venant prendre appui sur un talon de la batterie. La bride est fixée sur le bac de support, par exemple par visserie, et entraîne une pression de serrage importante sur le talon de la batterie. Cependant, l'utilisation d'outils est encore nécessaire pour le montage et le démontage de la batterie et le dispositif de fixation est composé de plusieurs pièces difficiles à manipuler. Par ailleurs, le coût de fabrication d'un tel dispositif reste élevé.

Un autre exemple de dispositif de fixation utilisant le talon de la batterie est un système de came pivotante. Un côté de la batterie est pris dans un talon fixe du bac de support et l'autre côté de la batterie coopère avec un système de came, montée à rotation parallèlement au bac de support. La came est mise en mouvement manuellement par un excentrique, qui vient prendre appui sur le talon de la batterie en position de verrouillage, tout en appliquant un serrage sur le talon. Cependant, ce type de dispositif nécessite également l'utilisation d'un outil du type tournevis, notamment lors du démontage de la batterie. Par ailleurs, des poussières peuvent venir encrasser les zones de frottement interne du dispositif de fixation. Il en résulte alors des difficultés de démontage de la batterie.

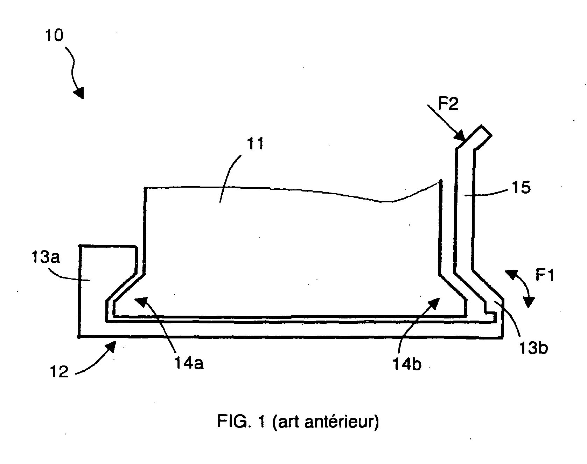

Un autre exemple est donné par le document FR 2 796 494, qui décrit un dispositif de fixation d'une batterie faisant partie intégrante du bac de support. Comme représenté schématiquement sur la figure 1, le dispositif de fixation 10 d'une batterie 11 comprend un bac de support 12 avec un premier rebord 13a, faisant office de butée pour un premier talon 14a de la batterie 11. Le bac de support 12 comporte un second rebord 13b muni d'une languette 15 déformable, articulée en rotation selon la flèche F1 et destinée à bloquer et débloquer rapidement la batterie 11. Le blocage s'effectue en appuyant le deuxième talon 14b de la batterie 11 contre la languette 15, qui se déforme et autorise alors le positionnement de la batterie 11 au fond du bac de support 12. Le déblocage de la batterie 11 s'effectue en exerçant une pression selon la flèche F2 sur l'extrémité libre de la languette 15, qui libère alors le deuxième talon 14b de la batterie 11 et autorise le dégagement de la batterie 11.

Même si ce type de dispositif évite l'utilisation d'outils, il ne garantit pas une fixation sécurisée de la batterie 11 dans le bac de support 12 et ne permet pas de vérifier si le talon de la batterie est bien en place. Par ailleurs, un tel dispositif de fixation ne permet pas d'avoir un verrouillage positif de la batterie dans le bac de support.
Un autre exemple de dispositif correspondant au préambule de la revendication 1 est illustré dans le document FR-A-2 779 010 qui décrit un dispositif à bascule avec un élément de blocage (24) du talon de la batterie qui est amovible. Cet élément de blocage est actionné par un levier (27) extérieur au bac de la batterie pour le déblocage du talon de la batterie et revient en position initiale par l'intermédiaire d'un ressort en spirale. L'inconvénient de ce type de dispositif à bascule est la réalisation du mouvement de l'élément de blocage qui peut se coincer dans son logement et si l'on force trop sur le levier (27), on risque de le détériorer en le faisant plier. La fonctionnalité du dispositif de blocage de la batterie n'est alors plus assurée.

### Objet de l'invention

L'invention a pour but de remédier à l'ensemble des inconvénients précités et a pour objet la réalisation d'un dispositif de fixation de batterie simple, peu coûteux, d'un poids et d'un encombrement réduits, permettant un verrouillage et un déverrouillage rapides et sûrs d'une batterie standard sur son bac de support, sans qu'il soit nécessaire d'utiliser des outils.

L'objet de l'invention est caractérisé en ce que :
- le bac de support comprend au moins un talon mobile, relié au second rebord longitudinal, coopérant avec un levier d'actionnement correspondant et définissant une première surface de blocage pour le second talon de la batterie,
- lesdits moyens de verrouillage comportent une rampe de verrouillage, s'insérant entre chaque talon mobile et chaque levier d'actionnement correspondant, ladite rampe comprenant au moins un coin de verrouillage présentant une première face inférieure inclinée, associée à une seconde surface de blocage du talon mobile correspondant, et une seconde face supérieure inclinée, associée au levier d'actionnement correspondant et destinée à assurer un verrouillage positif du levier d'actionnement, entre une première position de verrouillage de la position de la batterie dans le bac de support et une seconde position de déverrouillage.

Selon un développement de l'invention, chaque talon mobile est relié au rebord longitudinal correspondant du bac de support par l'intermédiaire de deux arêtes de liaison souples, formant des charnières élastiques et permettant le déplacement du talon mobile entre une première position de repos, en attente de la batterie, et une seconde position de blocage de la batterie.

De telles charnières souples facilitent le recul des talons mobiles et leur rappel automatique dans leur position initiale.

Selon un autre développement de l'invention, la face supérieure de chaque coin de verrouillage est dotée d'une pluralité de crans.

Les crans des coins de verrouillage assurent un verrouillage positif des leviers d'actionnement sur la rampe de verrouillage, empêchant tout désengagement intempestif des leviers d'actionnement.

Selon un mode de réalisation préférentiel, la rampe de verrouillage comporte une pluralité de coins de verrouillage, reliés par des zones de raccordement rigides à forte tenue mécanique, et en ce que le bac de support comporte une pluralité de talons mobiles, associés chacun à un levier d'actionnement correspondant, lui-même associé à un coin de verrouillage correspondant. Les leviers d'actionnement sont reliés à leur partie supérieure par des barres de raccordement, jouant le rôle de moyens de préhension des leviers.

Un tel dispositif de fixation est donc facilement manipulable et assure un verrouillage sécurisé de la position de la batterie, car tous les leviers sont actionnés simultanément vers la position de verrouillage.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente schématiquement une vue partielle d'un dispositif de fixation d'une batterie selon l'art antérieur.
Les figures 2 et 3 représentent, respectivement, une vue en perspective et une vue de face en coupe partielle d'un dispositif de fixation selon l'invention, sur lequel est positionnée une batterie.
Les figures 4 et 5 représentent, respectivement, une vue de face, en coupe selon l'axe A-A, et une vue de dessus d'un bac de support du dispositif de fixation selon les figures 2 et 3.
Les figures 6 et 7 représentent deux vues en perspective du bac de support selon les figures 4 et 5.
Les figures 8 et 9 représentent deux vues en perspective d'une rampe de verrouillage du dispositif de fixation selon les figures 2 et 3.
La figure 10 est une vue de côté en coupe selon l'axe B-B de la rampe de verrouillage selon les figures 8 et 9.
Les figures 11 à 17 représentent différentes étapes successives du montage d'une batterie sur le dispositif de fixation selon les figures 2 à 10.
Les figures 18 et 19 représentent deux étapes successives du démontage de la batterie du dispositif de fixation selon les figures 2 à 17.

### Description de modes particuliers de réalisation

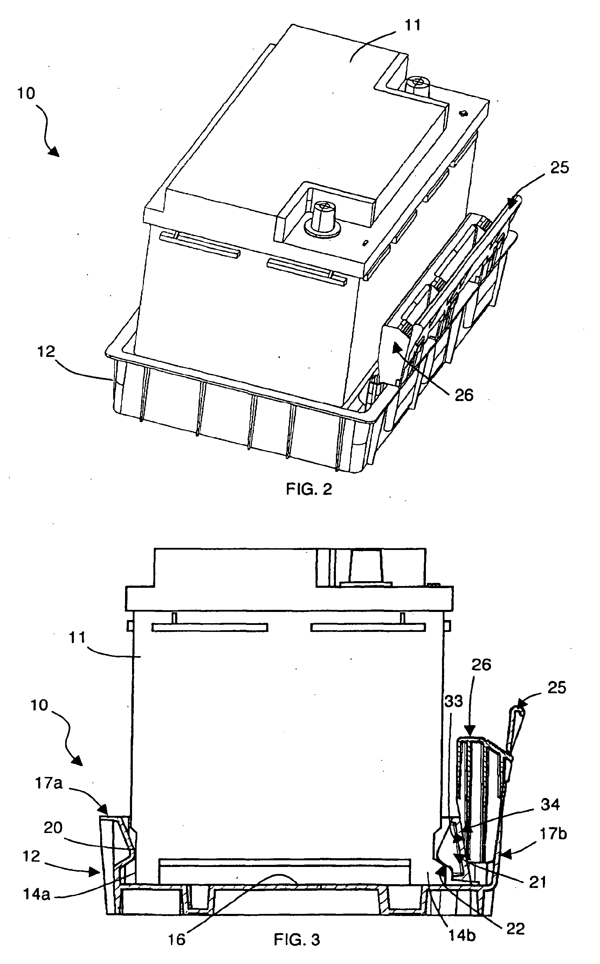

En référence aux figures 2 et 3, le dispositif de fixation 10 est destiné notamment à fixer une batterie 11 sur le châssis d'un véhicule automobile. Quelles que soient les dimensions normalisées de la batterie 11, le dispositif de fixation 10 comprend un bac de support 12 standard de forme générale sensiblement rectangulaire, apte à recevoir tous les types de batteries, et une rampe de verrouillage 26 permettant de verrouiller la position de la batterie 11 dans son bac de support 12.

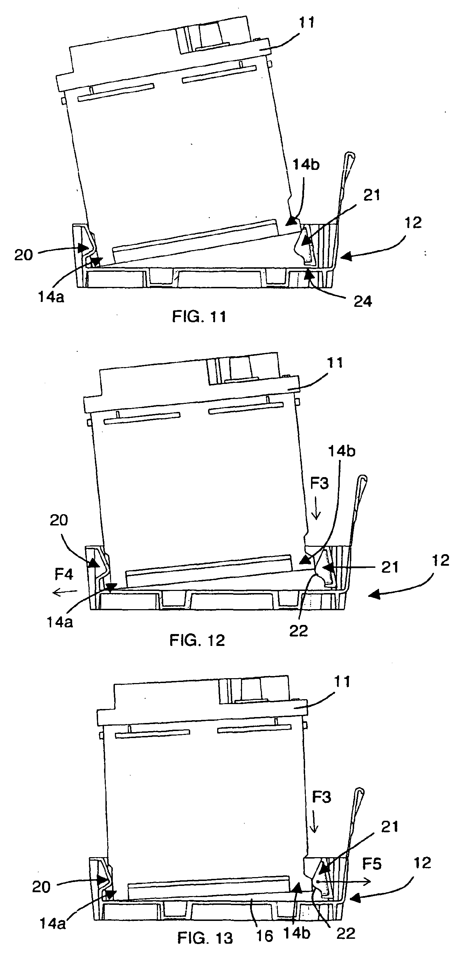

Le dispositif de fixation 10 selon l'invention permet ainsi, d'une part, de bloquer la batterie 11 dans son bac de support 12 et, d'autre part, de verrouiller la position de la batterie 11. Le dispositif de fixation 10 passe d'une première position de verrouillage (figures 2 et 3), dans laquelle la batterie 11 est solidement fixée, à une seconde position de déverrouillage (figures 11 à 14 et 18-19), dans laquelle la batterie 11 est démontable.

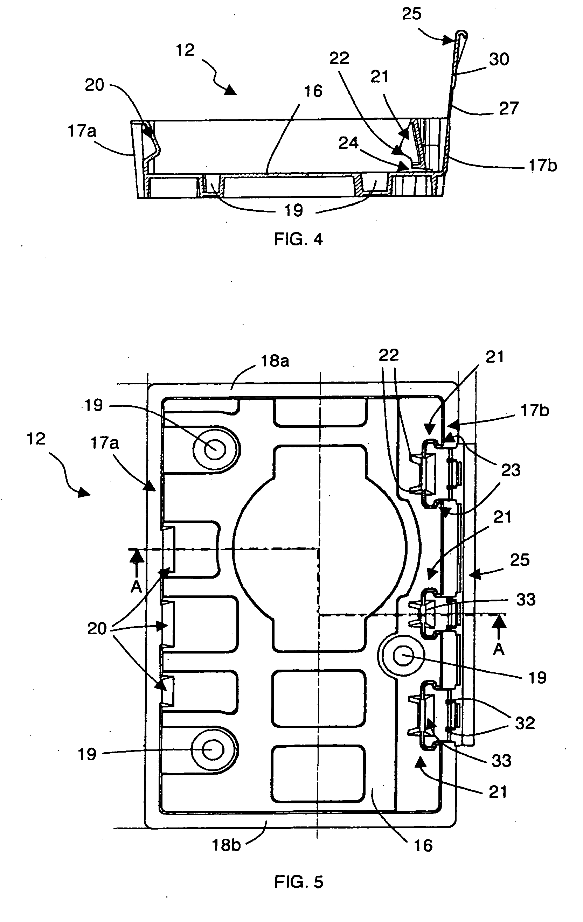

Sur les figures 4 à 7, le bac de support 12 de la batterie 11 comprend une face d'appui 16 sensiblement plane, sur laquelle repose la batterie 11 après montage, deux rebords longitudinaux 17a, 17b et deux rebords transversaux 18a, 18b. Le bac de support 12 est conçu, de préférence, avec un matériau permettant de résister aux différentes attaques de produits chimiques, présents notamment dans le corps de la batterie 12.

Sur la figure 5, trois orifices de fixations 19 sont percés à travers la face d'appui 16 du bac de support 12, pour permettre la solidarisation du dispositif de fixation 10 sur le châssis du véhicule ou sur tout autre support spécifique.

Le premier rebord longitudinal 17a comporte, de préférence, trois talons fixes 20, faisant saillie du rebord longitudinal 17a vers l'intérieur du bac de support 12 et destinés à coopérer avec le premier talon 14a de la batterie 11 (figure 3). Les talons fixes 20 définissent une seule pièce avec le bac de support 12 et sont conformés sur le rebord longitudinal 17a, de sorte qu'ils coopèrent avec la forme correspondante du talon 14a de la batterie 11. Les talons fixes 20 sont positionnés, de préférence, dans une partie médiane du rebord longitudinal 17a, afin notamment de pouvoir être utilisé quelle que soit la taille de la batterie 11 (figures 5 à 7).

Le bac de support 12 comporte, de préférence, trois talons mobiles 21, aptes à se déplacer entre une première position de repos, dans laquelle le bac de support 12 et les talons mobiles 21 sont dans l'attente du positionnement de la batterie 11 (figures 4 à 7 et 11), et une seconde position de blocage, dans laquelle le deuxième talon 14b de la batterie 11 est complètement bloqué par les talons mobiles 21 (figures 2, 3 et 15 à 17).

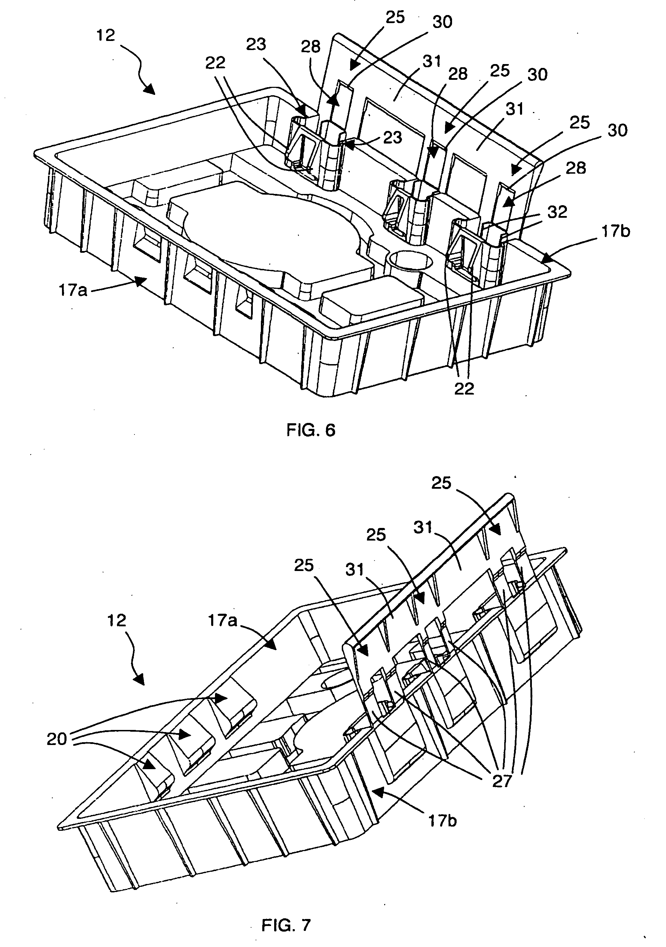

Chaque talon mobile 21 est conformé pour coopérer avec la forme correspondante du deuxième talon 14b de la batterie 11 (figure 3). Chaque talon mobile 21 comporte deux nervures de renfort 22 (figure 6), définissant une première surface de blocage pour le talon 14b de la batterie 11 (figure 3). Les deux nervures 22 renforcent la tenue mécanique des talons mobiles 21 (figures 5 et 6) et constituent une rampe inclinée facilitant le glissement du talon 14b lors du montage et du démontage de la batterie 11.

Avantageusement, la position des talons mobiles 21 sur le rebord longitudinal 17b est décalée par rapport à la position des talons fixes 20 sur le rebord longitudinal 17a (figure 5). Cette configuration permet au bac de support 12 de s'adapter à toutes les tailles de batterie 11 et permet d'optimiser le blocage de la batterie 11.

Sur les figures 5 et 6, chaque talon mobile 21 est relié au rebord longitudinal 17b par deux arêtes souples 23 formant des charnières élastiques, aptes à se déformer lors du montage et du démontage de la batterie 11 du bac de support 12. Les arêtes souples 23 ont une section sensiblement en S et se déforment élastiquement pour jouer le rôle de ressorts. Les arêtes souples 23 encaissent les efforts longitudinaux engendrés par le montage de la batterie 11, pour permettre le déplacement des talons mobiles 21 parallèlement à la face d'appui 16 du bac de support 12, en direction du rebord longitudinal 17b.

Par ailleurs, comme représenté sur la figure 4, chaque talon mobile 21 est relié uniquement au rebord longitudinal 17b correspondant et non à la face d'appui 16 du bac de support 12, pour autoriser le recul longitudinal des talons mobiles 21 en direction du rebord longitudinal 17b. Chaque talon mobile 21 délimite ainsi un espace vide 24, s'étendant entre la face d'appui 16 du bac de support 12 et l'extrémité inférieure des nervures de renfort 22 définissant la première surface de blocage du talon mobile 21. Cet espace vide 24 constitue notamment un jeu de rattrapage, nécessaire aux mouvements du talon 14b de la batterie 11, afin de compenser les différences de tailles entre les batteries 11 standards.

Sur les figures 4, 6 et 7, le rebord longitudinal 17b du bac de support 12 est prolongé, de préférence, par trois leviers d'actionnement 25, s'étendant sensiblement perpendiculairement à la face d'appui 16 du bac de support 12 et au niveau des talons mobiles 21. Les leviers 25 forment une seule pièce avec le bac de support 12 et jouent le rôle de leviers de verrouillage/déverrouillage, destinés à coopérer avec les talons mobiles 21 et la rampe de verrouillage 26 (figures 2 et 3), afin de verrouiller la position de la batterie 11 dans le bac de support 12.

À cet effet, chaque levier d'actionnement 25 est élastiquement déformable et monté à rotation sur le rebord longitudinal 17b, au niveau de chaque talon mobile 21, par l'intermédiaire d'éléments charnières 27, formés, par exemple, par un rétrécissement de matière dans l'épaisseur des leviers 25 (figures 4 et 7). Les éléments charnières 27 permettent aux leviers d'actionnement 25 de se mouvoir en rotation par rapport à leur partie basse les reliant au rebord longitudinal 17b, entre une position de verrouillage de la fixation de la batterie 11 dans le bac de support 12 (figures 2 et 3) et une position de déverrouillage de la fixation de la batterie 11 (figures 4 à 7). À titre d'exemple, les éléments charnières 27 sont des éléments de section rectangulaire, définis pour résister à un effort en traction important.

Avantageusement, les leviers d'actionnement 25 sont reliés à leur partie supérieure par une barre 31, jouant le rôle d'un organe de préhension facilitant la manipulation simultanée des leviers d'actionnement 25 (figures 6 et 7). Il en résulte un verrouillage facilité et plus sûr.

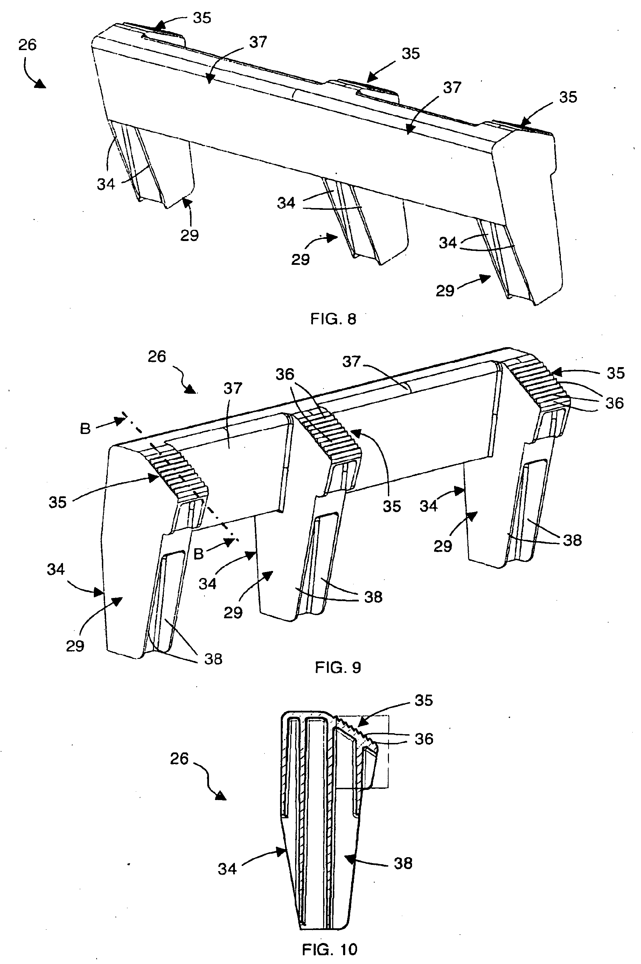

Sur les figures 8 à 10, la rampe de verrouillage 26 du dispositif de fixation 10 selon l'invention est dotée, de préférence, de trois coins de verrouillage 29, destinés à coopérer avec les talons mobiles 21 et les leviers d'actionnement 25 correspondants, pour le blocage et le verrouillage de la position de la batterie 11 dans son bac de support 12.

Chaque levier d'actionnement 25 comporte une ouverture 28, délimitée par les éléments charnières 27 et destinée à coopérer avec un coin de verrouillage 29 de la rampe 26. Chaque ouverture 28 est munie d'une arête biseautée 30, faisant saillie vers l'intérieur de l'ouverture 28 et destinée à coopérer avec le coin de verrouillage 29, comme décrit ci-dessous.

Sur les figures 5 et 6, le bac de support 2 comporte également des rainures de guidage 32, formées en saillie du rebord longitudinal 17b en direction du talon mobile 21 correspondant et dans le prolongement de l'ouverture 28 de chaque levier d'actionnement 25. Les rainures 32 coopèrent avec chaque coin de verrouillage 29 de la rampe 26 (figures 2 et 3), afin de centrer les coins de verrouillage 29 dans leur mouvement de descente.

Sur les figures 8 à 10, la rampe de verrouillage 26 comprend trois coins de verrouillage 29, coopérant chacun avec l'ouverture 28 d'un levier d'actionnement 25 et un talon mobile 21 correspondant du rebord longitudinal 17b. Chaque coin de verrouillage 29 s'intercale entre une deuxième surface de blocage 33 du talon mobile 21 associé (figures 3 et 5) et le rebord longitudinal 17b du bac de support 12.

Chaque coin de verrouillage 29 comporte deux nervures de centrage 34 définissant une première face inférieure inclinée (figure 10). Les nervures de centrage 34 de chaque coin de verrouillage 29 se positionnent et coulissent de part et d'autre de la seconde surface de blocage 33 du talon mobile 21 correspondant, lors de la mise en place de la rampe de verrouillage 26. Les nervures 34 permettent ainsi d'optimiser et d'améliorer la mise en place de la rampe de verrouillage 26.

Comme représenté sur la figure 3, la première face inférieure 34 de chaque coin de verrouillage 29 appuie sur la seconde surface de blocage 33 de chaque talon mobile 21 associé et la première surface de blocage 22 de chaque talon mobile 21 exerce alors une pression très forte sur le talon 14b de la batterie 11.

Chaque coin de verrouillage 29 comprend également une seconde face supérieure inclinée 35, coopérant avec l'ouverture 28 du levier d'actionnement 25 correspondant (figures 2 et 3).

La face supérieure inclinée 35 de chaque coin de verrouillage 29 est dotée d'une série de crans 36, destinés à coopérer avec l'arête biseautée 30 de l'ouverture 28 du levier d'actionnement 25 correspondant. Les crans 36 possèdent une légère inclinaison (figure 10), afin d'assurer un verrouillage positif du levier d'actionnement 25 sur le coin de verrouillage 29 associé et d'éviter le désenclenchement intempestif du levier 25. Les crans 36 permettent également de compenser les différences dimensionnelles des batteries 11, en offrant différentes possibilités de positionnement pour les leviers d'actionnement 25.

Les coins de verrouillage 29 passent à travers les ouvertures 28 des leviers d'actionnement 25, lors du verrouillage de la fixation de la batterie 11 dans le bac de support 12. Les arêtes biseautées 30 des ouvertures 28 viennent alors se placer dans un des crans 36 des faces supérieures 35 des coins de verrouillage 29, selon la taille de la batterie 11.

Par ailleurs, les coins de verrouillage 29 de la rampe 26 sont avantageusement reliés par des zones de raccordement 37, de section sensiblement rectangulaire, suffisamment rigides pour être manipulées à la main. Les zones de raccordement 37 sont à forte tenue mécanique, car les efforts appliqués par l'utilisateur sont exercés principalement sur les zones de raccordement 37.

Chaque coin de verrouillage 29 comporte également des nervures de positionnement 38 coopérant avec les rainures de guidage 32 formées contre le rebord longitudinal 17b. Les nervures de positionnement 38 des coins de verrouillage 29 et les rainures de guidage 32 du second rebord longitudinal 17b permettent notamment d'optimiser le positionnement de la rampe de verrouillage 26. Il en résulte un centrage optimal des coins de verrouillage 29 entre les talons mobiles 21 et le rebord longitudinal 17b.

Le montage de la batterie 11 dans le bac de support 12 du dispositif de fixation 10 selon l'invention, le verrouillage de sa position et le démontage de la batterie 11 vont être décrits plus en détail au regard des figures 11 à 19.

Sur la figure 11, la batterie 11 est mise en place dans le bac de support 12 en logeant d'abord le premier talon 14a en butée sous les talons fixes 20 du bac de support 12. La batterie 11 est alors inclinée en butée contre les talons fixes 20 et en appui sur les talons mobiles 21 du bac de support 12.

Sur les figures 12 et 13, une pression exercée par la batterie 11, selon la flèche F3, entraîne le glissement du premier talon 14a de la batterie 11 sur la face d'appui 16 du bac de support 12, selon la flèche F4, vers le fond des talons fixes 20. Le second talon 14b de la batterie 11 glisse le long de la première surface 22 des talons mobiles 21, entraînant le recul des talons mobiles 21 selon la flèche F5 (figure 13). Les talons mobiles 21 se déplacent vers l'arrière parallèlement à la face d'appui 16 du bac de support 12.

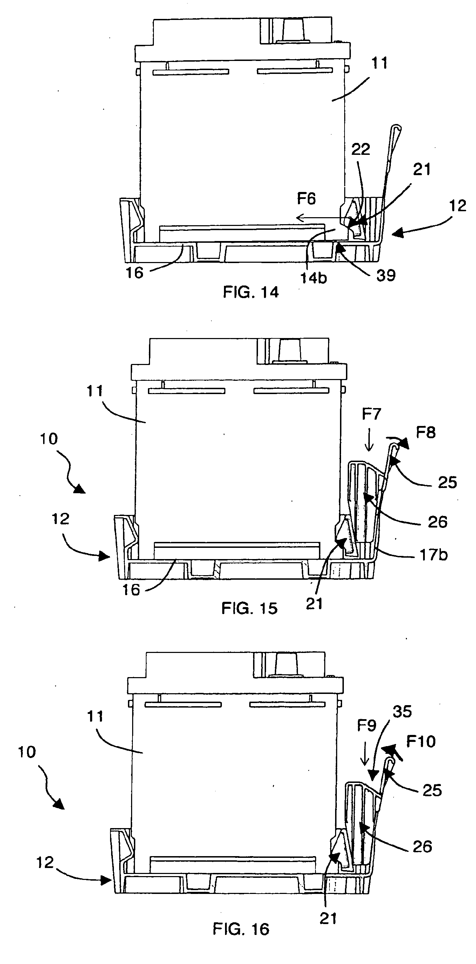

Sur la figure 14, la batterie 11 est positionnée sur la face d'appui 16 du bac de support 12. Les talons mobiles 21 sont revenus dans leur position de repos, selon la flèche F6, grâce à l'effet de retour élastique engendré par les arêtes souples 23 des talons mobiles 21. Les talons 14a et 14b de la batterie 11 sont alors bloqués, respectivement par les talons fixes 20 et les premières surfaces de blocage 22 des talons mobiles 21. Un léger espace vide 39 est encore présent entre le deuxième talon 14b de la batterie 11 et la face d'appui 16 du bac de support 12, car le serrage engendré par les talons mobiles 21 n'est pas maximal.

Dans la position représentée sur la figure 14, la première phase de montage de la batterie 11 dans le bac de support 12 est terminée. Il est nécessaire maintenant de verrouiller cette position, par l'intermédiaire de la rampe de verrouillage 26, pour éviter tout désassemblage intempestif de la batterie 11 hors du bac de support 12.

Sur la figure 15, la rampe de verrouillage 26 est mise en place entre les talons mobiles 21 et les leviers d'actionnement 25, selon la flèche F7, par glissement des nervures de centrage 34 de chaque coin de verrouillage 29 le long de la seconde surface de blocage 33 des talons mobiles 21 et coulissement des nervures de positionnement 38 le long des rainures de guidage 32 du second rebord longitudinal 17b. Les leviers d'actionnement 25 pivotent alors légèrement selon la flèche F8, lors de l'insertion de la rampe de verrouillage 26. Le positionnement des coins de verrouillage 29 entraîne également le plaquage de la batterie 11 sur la face d'appui 16 du bac de support 12 et l'élimination de l'espace vide résiduel 39 décrit ci-dessus. Il en résulte le blocage complet et maximal de la batterie 11 dans le bac de support 12.

Sur la figure 16, la phase de verrouillage de la position de la batterie 11 dans le bac de support 12 s'effectue en appliquant simultanément une pression sur la rampe de verrouillage 26, selon la flèche F9, et une rotation des leviers d'actionnement 25, selon la flèche F10, vers l'intérieur du bac de support 12 au-dessus de la rampe de verrouillage 26. Les coins de verrouillage 29 de la rampe 26 passe alors à travers les ouvertures 28 des leviers d'actionnement 25, lesquels viennent se positionner au niveau de la face supérieure 35 des coins de verrouillage 29. Cette étape correspond à un réglage grossier du verrouillage de la position de la batterie 11 dans son bac de support 12. Par ailleurs, le serrage provoqué par les leviers d'actionnement 25 impose à la rampe de verrouillage 26 de serrer encore plus les talons mobiles 21, en faisant descendre légèrement les coins de verrouillage 29.

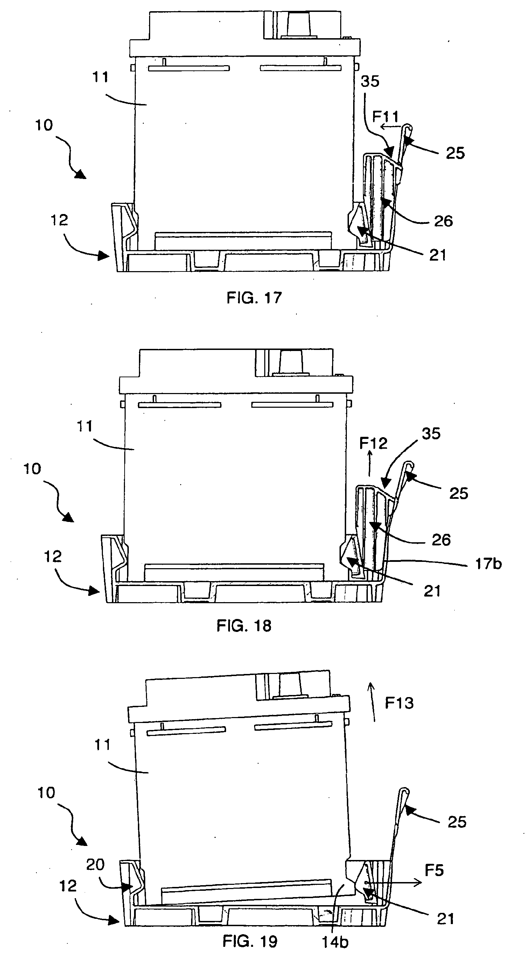

Sur la figure 17, la phase de verrouillage se termine en appliquant une poussée sensiblement horizontale, selon la flèche F11, sur les leviers d'actionnement 25, afin de les placer dans un cran 36 des faces supérieures 35 des coins de verrouillage 29, correspondant à la position maximale que peuvent atteindre les leviers d'actionnement 25. Le verrouillage est alors positif et empêche un désengagement intempestif des leviers 25. Cette phase correspond à un réglage fin du verrouillage de la position de la batterie 11 dans son bac de support 12.

Sur la figure 18, le déverrouillage de la batterie 11 s'effectue simplement en actionnant les leviers 25 dans le sens opposé aux flèches F10 et F11 des figures 16 et 17. Les crans 36 des faces supérieures 35 des coins de verrouillage 29 permettent le dégagement des leviers 25, car ils sont légèrement inclinés. La rampe de verrouillage 26 est alors dégagée du verrouillage engendré par les leviers d'actionnement 25. Il suffit alors d'ôter la rampe de verrouillage 26, selon la flèche F12.

Sur la figure 19, le démontage de la batterie 11 de son bac de support 12 consiste alors à la soulever selon la flèche F13 en la faisant pivoter autour des talons fixes 20 du bac de support 12. Les talons mobiles 21 reculent alors selon la flèche F5, permettant au deuxième talon 14b de la batterie 11 de se dégager des talons mobiles 21. La batterie 11 est alors démontée du bac de support 12.

Un tel dispositif de fixation 10 d'une batterie 11, permettant un montage et un démontage faciles, comme décrit ci-dessus, est donc simple, peu coûteux, d'un poids et d'un encombrement réduits. Il permet simultanément de bloquer et verrouiller de façon efficace et sûre la position de la batterie 11 dans son bac de support 12.

Le dispositif de fixation 10 ne comporte qu'une seule pièce mobile en plus du bac de support 12, à savoir la rampe de verrouillage 26, pour la fixation et le verrouillage de la batterie 11. Les faces supérieures 35 crantées des coins de verrouillage 29 permettent un verrouillage positif efficace des leviers d'actionnement 25.

Par ailleurs, les leviers d'actionnement 25 sont raccordés entre eux pour une meilleure préhension et une manipulation plus rapide et plus sûre. Le verrouillage et le déverrouillage de la batterie 11 sont simples et rapides et s'effectuent sans outils.

L'invention n'est pas limitée aux différents modes de réalisation décrits ci-dessus. Sur les figures 2 à 19, le dispositif de fixation 10 comporte trois talons fixes 20 et trois talons mobiles 21, pour pouvoir répondre à la fixation de toutes les tailles de batteries standard. Il est évident que le dispositif 10 peut comporter un nombre différent de talons mobiles 21 et de talons fixes 20, tant que le nombre de talons mobiles 21 est égal au nombre de coins de verrouillage 29 de la rampe de verrouillage 26, lui-même égal au nombre de leviers d'actionnement 25 du bac de support 12, afin d'assurer un blocage et un verrouillage optimum.

## Revendications

1. Dispositif de fixation (10) d'une batterie (11), notamment pour véhicule automobile, comprenant :
- un bac de support (12) présentant une face d'appui (16) sensiblement plane et deux rebords longitudinaux (17a, 17b) coopérant avec des premier (14a) et second (14b) talons de la batterie (11), un premier rebord longitudinal (17a) comprenant au moins un talon fixe (20), servant de butée de positionnement au premier talon (14a) de la batterie (11), lors du montage de la batterie (11) dans le bac de support (12),
- des moyens de verrouillage, associés au second rebord longitudinal (17b) et comprenant au moins un levier d'actionnement (25), élastiquement déformable entre une première position de blocage de la batterie (11) dans le bac de support (12) et une seconde position de déblocage de la batterie (11).
- le bac de support (12) comprend au moins un talon mobile (21), relié au second rebord longitudinal (17b), coopérant avec un levier d'actionnement (25) correspondant et définissant une première surface de blocage (22) pour le second talon (14b) de la batterie (11),
dispositif **caractérisé en ce que** :
- lesdits moyens de verrouillage comportent une rampe de verrouillage (26), s'insérant entre chaque talon mobile (21) et chaque levier d'actionnement (25) correspondant, ladite rampe (26) comprenant au moins un coin de verrouillage (29) présentant une première face inférieure (34) inclinée, associée à une seconde surface de blocage (33) du talon mobile (21) correspondant, et une seconde face supérieure (35) inclinée, associée au levier d'actionnement (25) correspondant et destinée à assurer un verrouillage positif du levier d'actionnement (25), entre une première position de verrouillage de la position de la batterie (11) dans le bac de support (12) et une seconde position de déverrouillage.

2. Dispositif selon la revendication 1, **caractérisé en ce que** chaque talon mobile (21) est relié au rebord longitudinal (17b) correspondant du bac de support (12) par l'intermédiaire de deux arêtes de liaison (23) souples, formant des charnières élastiques et permettant le déplacement du talon mobile (21) entre une première position de repos, en attente de la batterie (11), et une seconde position de blocage de la batterie (11).

3. Dispositif selon l'une des revendications 1 et 2, **caractérisé en ce que** chaque talon mobile (21) est relié au second rebord longitudinal (17b), de sorte qu'il délimite un espace vide (24), entre la face d'appui (16) du bac de support (12) et une extrémité inférieure de sa première surface de blocage (22).

4. Dispositif selon l'une quelconque des revendications 1 à 3, **caractérisé en ce que** la face supérieure (35) de chaque coin de verrouillage (29) est dotée d'une pluralité de crans (36).

5. Dispositif selon l'une quelconque des revendications 1 à 4, **caractérisé en ce que** la rampe de verrouillage (26) comporte une pluralité de coins de verrouillage (29), reliés par des zones de raccordement (37) rigides à forte tenue mécanique, et **en ce que** le bac de support (12) comporte une pluralité de talons mobiles (21), associés chacun à un levier d'actionnement (25) correspondant, lui-même associé à un coin de verrouillage (29) correspondant.

6. Dispositif selon la revendication 5, **caractérisé en ce que** les leviers d'actionnement (25) sont reliés à leur partie supérieure par des barres de raccordement (31), jouant le rôle de moyens de préhension des leviers (25).

7. Dispositif selon l'une quelconque des revendications 1 à 6, **caractérisé en ce que** chaque levier d'actionnement (25) délimite une ouverture (28), destinée à coopérer avec le coin de verrouillage (29) associé de la rampe de verrouillage (26).

8. Dispositif selon la revendication 7, **caractérisé en ce que** l'ouverture (28) de chaque levier d'actionnement (25) comprend une arête biseautée (30), coopérant avec la face supérieure (35) du coin de verrouillage (29) associé.

9. Dispositif selon l'une quelconque des revendications 1 à 8, **caractérisé en ce que** la face inférieure de chaque coin de verrouillage (29) est définie par deux nervures de centrage (34), se positionnant de part et d'autre de la seconde surface de blocage (33) du talon mobile (21) correspondant.

10. Dispositif selon l'une quelconque des revendications 1 à 9, **caractérisé en ce que** le second rebord longitudinal (17b) comporte des rainures de guidage (32), agencées dans le prolongement de chaque levier d'actionnement (25) et destinées à guider le positionnement du coin de verrouillage (29) correspondant de la rampe de verrouillage (26).

## Claims

1. Fixing device (10) for a battery (11), notably for automobile vehicles, comprising:
- a support tray (12) having a substantially plane bearing face (16) and two longitudinal rims (17a, 17b) cooperating with a first heel (14a) and a second heel (14b) of the battery (11), a first longitudinal rim (17a) comprising at least one fixed heel (20) serving as a locating abutment for the first heel (14a) of the battery (11) when mounting the battery (11) in the support tray (12),
- locking means associated with the second longitudinal rim (17b) and comprising at least one actuating lever (25) elastically deformable between a first position immobilising the battery (11) in the support tray (12) and a second position releasing the battery (11),
- the support tray (12) comprises at least one mobile heel (21) connected to the second longitudinal rim (17b), cooperating with a corresponding actuator lever (25) and defining a first immobilising surface (22) for the second heel (14b) of the battery (11),
which devices is **characterised in that**:
- said locking means include a locking ramp (26) inserted between each mobile heel (21) and each corresponding actuating lever (25), said ramp (26) comprising at least one locking wedge (29) having an inclined lower first face (34) associated with a second immobilising surface (33) of the corresponding mobile heel (21) and an inclined upper second face (35) associated with the corresponding actuating lever (25) and adapted to provide positive locking of the actuating lever (25) between a first position for locking the position of the battery (11) in the support tray (12) and an unlocking second position.

2. Device according to claim 1, **characterised in that** each mobile heel (21) is connected to the corresponding longitudinal rim (17b) of the support tray (12) via two flexible connecting edges (23) forming elastic hinges and enabling movement of the mobile heel (21) between a rest first position awaiting the battery (11) and a second position immobilising the battery (11).

3. Device according to either of claims 1 or 2, **characterised in that** each mobile heel (21) is connected to the second longitudinal rim (17b) so that it delimits an empty space (24) between the bearing face (16) of the support tray (12) and a lower edge of its first immobilising surface (22).

4. Device according to any of claims 1 to 3, **characterised in that** the upper face (35) of each locking wedge (29) is provided with a plurality of detents (36).

5. Device according to any of claims 1 to 4, **characterised in that** the locking ramp (26) includes a plurality of locking wedges (29) connected by rigid connecting areas (37) of high mechanical strength and **in that** the support tray (12) includes a plurality of mobile heels (21) each associated with a corresponding actuating lever (25) itself associated with a corresponding locking wedge (29).

6. Device according to claim 5, **characterised in that** the upper portions of the actuating levers (25) are connected by connecting bars (31) serving as means for holding the levers (25).

7. Device according to any of claims 1 to 6, **characterised in that** each actuating lever (25) delimits an opening (28) adapted to cooperate with the associated locking wedge (29) of the locking ramp (26).

8. Device according to claims 7, **characterised in that** the opening (28) of each actuating lever (25) comprises a bevelled edge (30) cooperating with the upper face (35) of the associated locking wedge (29).

9. Device according to any of claims 1 to 8, **characterised in that** the lower face of each locking wedge (29) is defined by two centring ribs (34) positioned on respective opposite sides of the second immobilising surface (33) of the corresponding mobile heel (21.

10. Device according to any of claims 1 to 9, **characterised in that** the second longitudinal rim (17b) includes guide grooves (32) arranged in line with each actuating lever (25) and adapted to guide the positioning of the corresponding locking wedge (29) of the locking ramp (26).

## Patentansprüche

1. Befestigungsvorrichtung (10) einer Batterie (11), insbesondere für ein Kraftfahrzeug, die
- über einen Trägerkasten (12), der eine im Wesentlichen flache Auflagefläche (16) und zwei Längskanten (17a, 17b) aufweist, die mit dem ersten (14a) und dem zweiten (14b) Vorsprung der Batterie (11) zusammenwirken, wobei eine erste Längskante (17a) wenigstens einen festen Vorsprung (20) aufweist, der als Positionierungsanschlag des ersten Vorsprungs (14a) der Batterie (11) während der Montage der Batterie (11) in den Trägerkasten (12) dient, und
- über Verriegelungsmittel verfügt, die mit der zweiten Längskante (17b) verbunden sind und wenigstens einen Betätigungshebel (25) aufweisen, der zwischen einer ersten Sperrstellung der Batterie (11) in dem Trägerkasten (12) und einer zweiten Sperrstellung der Batterie (11) elastisch verformbar ist,
- wobei der Trägerkasten (12) wenigstens einen beweglichen Vorsprung (21) aufweist, der mit der zweiten Längskante (17b) verbunden ist und mit einem entsprechenden Betätigungshebel (25) zusammenwirkt sowie eine erste Sperrfläche (22) für den zweiten Vorsprung (14b) der Batterie (11) bildet,
wobei die Vorrichtung **dadurch gekennzeichnet ist, dass**
- die Verriegelungsmittel eine Verriegelungsrampe (26) aufweisen, die zwischen jedem beweglichen Vorsprung (21) und jedem entsprechenden Betätigungshebel (25) einfügbar ist, wobei die Rampe (26) wenigstens einen Verriegelungskeil (29) aufweist, der über eine erste geneigte Unterseite (34), die mit einer zweiten Sperrfläche (33) des entsprechenden beweglichen Vorsprungs (21) verbunden ist, und über eine zweite geneigte Oberseite (35) verfügt, die mit dem entsprechenden Betätigungshebel (25) verbunden und dazu eingerichtet ist, eine positive Verriegelung des Betätigungshebels (25) zwischen einer ersten Verriegelungsstellung der Stellung der Batterie (11) in dem Trägerkasten (12) und einer zweiten Entriegelungsstellung sicherzustellen.

2. Vorrichtung nach Anspruch 1, **dadurch gekennzeichnet, dass** jeder bewegliche Vorsprung (21) mit der entsprechenden Längskante (17b) des Trägerkastens (12) durch zwei nachgiebige Verbindungskanten (23) verbunden ist, die elastische Gelenke bilden und das Verschieben des beweglichen Vorsprungs (21) zwischen einer ersten Ruhestellung in Erwartung der Batterie (11) und einer zweiten Sperrstellung der Batterie (11) erlaubt.

3. Vorrichtung nach einem der Ansprüche 1 und 2, **dadurch gekennzeichnet, dass** jeder bewegliche Vorsprung (21) mit der zweiten Längskante (17b) verbunden ist, so dass er einen Freiraum (24) zwischen der Auflagefläche (16) des Trägerkastens (12) und einem unteren Ende seiner ersten Sperrfläche (22) begrenzt.

4. Vorrichtung nach einem der Ansprüche 1 bis 3, **dadurch gekennzeichnet, dass** die Oberseite (35) jedes Verriegelungskeils (29) über eine Anzahl von Kerben (36) verfügt.

5. Vorrichtung nach einem der Ansprüche 1 bis 4, **dadurch gekennzeichnet, dass** die Verriegelungsrampe (26) eine Anzahl von Verriegelungskeilen (29) aufweist, die über steife Verbindungsbereiche (37) mit hoher mechanischer Widerstandsfähigkeit verbunden sind, und dass der Trägerkasten (12) eine Anzahl von beweglichen Vorsprüngen (21) aufweist, die jeweils mit einem entsprechenden Betätigungshebel (25) verbunden sind, der wiederum mit einem entsprechenden Verriegelungskeil (29) verbunden ist.

6. Vorrichtung nach Anspruch 5, **dadurch gekennzeichnet, dass** die Betätigungshebel (25) an ihrem oberen Abschnitt durch Verbindungsglieder (31) verbunden sind, die als Greifmittel für die Hebel (25) dienen.

7. Vorrichtung nach einem der Ansprüche 1 bis 6, **dadurch gekennzeichnet, dass** jeder Betätigungshebel (25) eine Öffnung (28) begrenzt, die dazu eingerichtet ist, mit dem mit der Verriegelungsrampe (26) verbundenen Verriegelungskeil (29) zusammenzuwirken.

8. Vorrichtung nach Anspruch 7, **dadurch gekennzeichnet, dass** die Öffnung (28) jedes Betätigungshebels (25) eine abgeschrägte Kante (30) aufweist, die mit der Oberseite (35) des zugeordneten Verriegelungskeils (29) zusammenwirkt.

9. Vorrichtung nach einem der Ansprüche 1 bis 8, **dadurch gekennzeichnet, dass** die Unterseite jedes Verriegelungskeils (29) durch zwei Zentrierrippen (34) gebildet ist, die auf beiden Seiten der zweiten Sperrfläche (33) des entsprechenden beweglichen Vorsprungs (21) angeordnet sind.

10. Vorrichtung nach einem der Ansprüche 1 bis 9, **dadurch gekennzeichnet, dass** die zweite Längskante (17b) Führungsnuten (32) aufweist, die in Verlängerung jedes Betätigungshebels (25) ausgebildet und dazu eingerichtet sind, die Positionierung des entsprechenden Verriegelungskeils (29) der Verriegelungsrampe (26) zu führen.
